# EUROPEAN PATENT APPLICATION

(11) **EP 2 998 609 A1**
(43) Date of publication of application: **23.03.2016**
(21) Application number: 15181816.8
(22) Date of filing: 20.08.2015
(51) Int. Cl.: F16F 7/02, B66C 3/00

(54) **HYDRAULICALLY OPERATED PIVOTAL JOINT AND SWING DAMPING DEVICE**

(30) Priority: 22.08.2014 FI 20145737
(71) Applicant: Sampo-Hydraulics Oy, 40420 Jyskä (FI)
(72) Inventor: Kuirinlahti, Henri, 40800 Vaajakoski (FI)
(74) Representative: Papula Oy

(57) **Abstract**

A hydraulically operated pivotal joint for dampening a swing motion of a swing damping device, the hydraulically operated pivotal joint comprising a non-pivoting pin, a first inner channel arrangement comprising a first pressure inlet for providing an inlet for a pressure medium, a first braking arrangement arranged to create a braking force for dampening the swing motion, wherein the braking force is provided by the first braking arrangement by means of pressure provided by the pressure medium conducted to the first braking arrangement via the first inner channel arrangement. The first inner channel arrangement comprises a first pressure outlet, where to the pressure medium is conducted from the first pressure inlet through the non-pivoting pin and through the first braking arrangement to enable conducting of the pressure medium for a second hydraulically operated moving apparatus of the swing damping device.

## Description

### FIELD

A hydraulically operated pivotal joint of a swing damping device may be used, for example, in a harvester, other forestry machines, construction and mining equipment, special duty machines or similar applications.

### BACKGROUND

There are various types of hydraulically operated pivotal joints for a swing damping device in the market. The swing damping device is used to maneuver various types of actuators that suspend from a crane arm, crane jib, or a boom of an operated machine. The actuator carries out different kind of tasks, such as grabbing logs or harvesting wood. Usually there is equipment that needs hydraulic pressure to operate in the machines and the maneuvering circuit of a crane of a machine is also controlled by hydraulics. In a swing damping device a hydraulically operated pivotal joint is used to dampen/brake swinging motion of an actuator or a working element, such as a work tool around one or two axis. It is more reliable to operate and work with the machine when the machine is equipped with the swing damping device as pendulum or swinging movement during the machine operation can be controlled by means of the swing damping device.

Typically swing motion is controlled by a mechanically operated brake. The brake may comprise brake discs or cone-like elements that create the friction needed for the braking. For example, a swing damping device is known, which has a brake which has both mechanically and hydraulically operative braking elements. In this swing damping device the normal braking force of the brake can be adjusted in the mechanical brake element to a certain value by tightening a nut in the brake, which obtains a basic braking action of the brake. Braking can be increased by aid of hydraulic oil. The hydraulic oil is conducted to the brake, which affects the increase of the braking force of the brake by moving a hydraulic piston. Pressure medium is conducted inside the swing damping device from a duct system, which is used to control the braking force of a single brake.

Another way is to arrange one or more hydraulically operated brakes into the swing damping device. A conventional way is to connect two of these brakes in the swing damping device via hydraulic hoses and fittings. For example, in harvester use there are a lot of potential situations where the hose may come in contact with a log or a tree branch, which can damage the hose when operating the machine. Further, general problems with hydraulic hoses include that the hoses can break down especially when the machine is in a substantially hard operation. In an area where the machine is normally operated there is usually no possibility to get a replacement hose. This leads to unwanted shutdown of the operation of the operating machine. Hoses are at least partially made of rubber and metal wires, which eventually wears especially when they are exposed to high or low temperatures, sunlight, water, dirt, excessive movement and mechanical erosion, which are typically prevailing in the working conditions of the operating machine. High and low temperatures shorten the lifetime of the hose. A swing dampening device that is equipped with additional external hoses has more wearing parts and can have shorter service life and requires more maintenance.

When hoses are needed in a swing dampening device also fittings must be equipped to the device. Normally the hoses are tightened to the fittings and in the course of time the connection can come loose, which can create leakage points. Checking possible leakage points requires manual check-up work, which is unwanted from the operator side.

Hoses may require supporting or protecting the hoses from impact or excessive movement. Hoses are also a security risk because needle pin holes can appear on the material of the hose and the pressure medium coming from the hole can cause injuries to people working with or around the operating machine. Replacing broken hoses is an expensive and time consuming process as the pressure medium has to be cleaned from the operating machine and also from the area below the operating machine, which has also an environmental impact. Hoses also increase the maintenance cost of a swing damping device. By adding hoses in the swing damping device it increases the amount of weak points in the device.

A brake of a swing dampening device equipped with a hydraulic connection using a hose is known. In one embodiment of this swing dampening device the pressure medium is delivered from the hose inside the swing dampening device to a pressure chamber. The pressure in the pressure chamber acts on a plunger, which effects a compression of a brake unit by compressing the discs of the brake unit together. This solution has a risk of getting broken in the operation as the hose is directly located in the working area of the machine. In harvester use the hose can be considered to be located in a so called "risk zone" considering the fact that an impact of a tree branch or a log is very likely.

Reference US 4679839 A discloses a log skidder having a lifting arm which may be raised or lowered by hydraulic pressure. A hydraulic braking mechanism is provided for snubbing movement about each axis of the supporting swivel of a grapple in a log skidder. This solution discloses two brake actuators, which brake line is connected to the brake actuators by a conventional hydraulic fitting. The brake actuators have an internal tread for receipt of a fitting on the end of a flexible hydraulic brake line.

### SUMMARY

According to a first aspect, there is provided a hydraulically operated pivotal joint for a swing damping device, wherein the hydraulically operated pivotal joint is arranged to dampen a swing motion, the hydraulically operated pivotal joint comprising a non-pivoting pin, a first inner channel arrangement comprising a first pressure inlet for providing an inlet for a pressure medium, a first braking arrangement arranged to create a braking force for dampening the swing motion, wherein the braking force is provided by the first braking arrangement by means of pressure provided by the pressure medium conducted to the first braking arrangement via the first inner channel arrangement. The first inner channel arrangement further comprises a first pressure outlet, where to the pressure medium is conducted from the first pressure inlet through the non-pivoting pin and through the first braking arrangement to enable conducting of the pressure medium for a second hydraulically operated moving apparatus of the swing damping device.

According to a second aspect, there is provided a hydraulically operated pivotal joint for a swing damping device mounted to a harvester, wherein the hydraulically operated pivotal joint is arranged to dampen a swing motion, the hydraulically operated pivotal joint comprising a non-pivoting pin, a first inner channel arrangement comprising a first pressure inlet for providing an inlet for a pressure medium, a first braking arrangement arranged to create a braking force for dampening the swing motion, wherein the braking force is provided by the first braking arrangement by means of pressure provided by the pressure medium conducted to the first braking arrangement via the first inner channel arrangement. The first inner channel arrangement further comprises a first pressure outlet, where to the pressure medium is conducted from the first pressure inlet through the non-pivoting pin and through the first braking arrangement to enable conducting of the pressure medium for a second hydraulically operated moving apparatus of the swing damping device.

According to a third aspect , there is provided a hydraulically operated pivotal joint for a swing damping device, wherein the hydraulically operated pivotal joint is arranged to dampen a swing motion of a working element in relation to a crane arm of a working machine, and to which crane arm the working element is suspended via the swing damping device, the hydraulically operated pivotal joint comprising a non-pivoting pin, a first inner channel arrangement comprising a first pressure inlet for providing an inlet for a pressure medium, a first braking arrangement arranged to create a braking force for dampening the swing motion, wherein the braking force is provided by the first braking arrangement by means of pressure provided by the pressure medium conducted to the first braking arrangement via the first inner channel arrangement. The first inner channel arrangement further comprises a first pressure outlet, where to the pressure medium is conducted from the first pressure inlet through the non-pivoting pin and through the first braking arrangement to enable conducting of the pressure medium for a second hydraulically operated moving apparatus of the swing damping device.

According to a fourth aspect, there is provided a hydraulically operated pivotal joint for a swing damping device, wherein the hydraulically operated pivotal joint is arranged to dampen a swing motion, the hydraulically operated pivotal joint comprising a non-pivoting pin, a first inner channel arrangement comprising a first pressure inlet for providing an inlet for a pressure medium, a first braking arrangement arranged to create a braking force for dampening the swing motion, wherein the braking force is provided by the first braking arrangement by means of pressure provided by the pressure medium conducted to the first braking arrangement via the first inner channel arrangement. The first inner channel arrangement further comprises a first pressure outlet for conducting the pressure outside the hydraulically operated pivotal joint enabling further use of the pressure medium, where to the first pressure outlet the pressure medium is conducted from the first pressure inlet through the non-pivoting pin and through the first braking arrangement. Braking force of the first braking arrangement is increasable and decreasable and switchable on and off by adjustment of the pressure of the pressure medium.

According to a fifth aspect, there is provided a hydraulically operated pivotal joint for a swing damping device, wherein the hydraulically operated pivotal joint is arranged to dampen a swing motion, the hydraulically operated pivotal joint comprising a non-pivoting pin, a first inner channel arrangement comprising a first pressure inlet for providing an inlet for a pressure medium, a first braking arrangement arranged to create a braking force for dampening the swing motion, wherein the braking force is provided by the first braking arrangement by means of pressure provided by the pressure medium conducted to the first braking arrangement via the first inner channel arrangement. The first inner channel arrangement comprises a swivel joint comprising a first ball joint and a second ball joint connected to each other with a distance from one another, wherein the first ball joint is located inside the first braking arrangement and the second ball joint is located inside the non-pivoting pin to enable eccentricity between the first braking arrangement and the non-pivoting pin and to conduct the pressure medium between the first braking arrangement and the non-pivoting pin.

In one embodiment of the hydraulically operated pivotal joint, the non-pivoting pin comprises a first pivoting axis, wherein the non-pivoting pin is arranged to receive the swing motion around the first pivoting axis.

In one embodiment of the hydraulically operated pivotal joint, the first braking arrangement comprises a housing, wherein the first inner channel arrangement leads through the housing to the non-pivoting pin, which are arranged to pivot in relation to each other.

In one embodiment of the hydraulically operated pivotal joint, the first braking arrangement comprise at least a first friction element and a second friction element which are arranged to create the friction force, which dampens the swing motion. In one embodiment of the hydraulically operated pivotal joint, the braking force between the first friction element and the second friction element is increasable and decreasable by adjustment of the pressure of the pressure medium. In one embodiment of the hydraulically operated pivotal joint, the first friction element is non-rotatably connected to the housing to pivot with the housing and the second friction element is non-rotatably connected to the non-pivoting pin.

In one embodiment of the hydraulically operated pivotal joint, the first braking arrangement comprises a piston arranged to reciprocate inside the first braking arrangement by means of pressure provided by the pressure medium, and arranged to push the first friction element and the second friction element towards each other to effect the braking force of the first braking arrangement.

In one embodiment of the hydraulically operated pivotal joint, the first inner channel arrangement comprises a swivel joint comprising a first ball joint and a second ball joint connected to each other with a distance from one another, wherein the first ball joint is located inside the first braking arrangement and the second ball joint is located inside the non-pivoting pin to enable eccentricity between the first braking arrangement and the non-pivoting pin and to conduct the pressure medium between the first braking arrangement and the non-pivoting pin. In one embodiment of the hydraulically operated pivotal joint, the first ball joint is concentric with the second ball joint. In one embodiment of the hydraulically operated pivotal joint, the first swivel joint functions as a hydraulic bushing between the first braking arrangement and the non-pivoting pin to conduct pressure medium between the first braking arrangement and the non-pivoting pin.

According to a sixth aspect, there is provided a swing damping device comprising the hydraulically operated pivotal joint according to the first aspect, wherein the swing damping device further comprises: a second hydraulically operated pivotal joint; and a suspension link arranged between the hydraulically operated pivotal joint and the second hydraulically operated pivotal joint, the suspension link comprising a second inner channel arrangement, wherein the suspension link is arranged to conduct the pressure medium from the first pressure outlet of the hydraulically operated pivotal joint to a second pressure inlet of the second hydraulically operated pivotal joint through the second inner channel arrangement. In one embodiment of the swing damping device, the second hydraulically operated pivotal joint is arranged to be perpendicular in relation to the hydraulically operated pivotal joint by means of the suspension link.

According to a seventh aspect, there is provided a swing damping device comprising the hydraulically operated pivotal joint according to the first aspect, wherein the swing damping device further comprises: a second hydraulically operated pivotal joint comprising a second non-pivoting pin, a third inner channel arrangement, a second braking arrangement arranged to create a braking force for dampening the swing motion, wherein the braking force is provided by the second braking arrangement by means of pressure provided by the pressure medium conducted to the second braking arrangement via the third inner channel arrangement; and a suspension link arranged between the hydraulically operated pivotal joint and the second hydraulically operated pivotal joint, the suspension link comprising a second inner channel arrangement, wherein the suspension link is arranged to conduct the pressure medium from the first pressure outlet to a second pressure inlet of the second hydraulically operated pivotal joint through the second inner channel arrangement.

In one embodiment of the swing damping device, the second hydraulically operated pivotal joint comprises a second non-pivoting pin comprising a second pivoting axis, wherein the second non-pivoting pin is arranged to receive the swing motion around the second pivoting axis. In one embodiment of the swing damping device, the second hydraulically operated pivotal joint further comprises a second braking arrangement arranged to create a braking force for dampening the swing motion, wherein the braking force is provided by the second braking arrangement by means of pressure provided by the pressure medium conducted to the second braking arrangement from the second pressure inlet of the second hydraulically operated pivotal joint. In one embodiment of the swing damping device, the second hydraulically operated pivotal joint further comprises a second braking arrangement arranged to create a braking force for dampening the swing motion, wherein the braking force is provided by the second braking arrangement by means of pressure provided by the pressure medium conducted to the second braking arrangement from the crane arm. In one embodiment of the invention the second braking arrangement comprises a third pressure inlet for the pressure medium.

In one embodiment of the swing damping device, the swing damping device is arranged to be rotatably connected to a crane arm of a working machine. In one embodiment of the swing damping device, the swing damping device is arranged to be rotatably connected to a working element of a working machine.

In one embodiment of the swing damping device, the first pressure inlet of the hydraulically operated pivotal joint is adapted to receive the pressure medium from the working element. In one embodiment of the swing damping device, the pressure inlet of the hydraulically operated pivotal joint is adapted to receive the pressure medium from a rotator. In one embodiment of the swing damping device, the first pressure inlet of the hydraulically operated pivotal joint is adapted to receive the pressure medium from the crane arm.

In one embodiment of the swing damping device, the working machine is a harvester. In one embodiment of the swing damping device, the working element is a rotator or a work tool or combination of a rotator and a work tool. In one embodiment of the swing damping device, the swing damping device is mounted in a harvester, wherein a rotator is suspended via the swing damping device.

According to an eight aspect, there is provided method for manufacturing a hydraulically operated pivotal joint for a swing damping device, wherein the hydraulically operated pivotal joint is arranged to dampen a swing motion of the swing damping device, the hydraulically operated pivotal joint comprising a non-pivoting pin, a braking arrangement, which is arranged to create a braking force for dampening the swing motion. The hydraulically operated pivotal joint is manufactured by assembling the braking arrangement at one end of the non-pivoting pin and at least partially around the non-pivoting pin after the non-pivoting pin is mounted into the hydraulically operated pivotal joint.

The described hydraulically operated pivotal joint has many advantages. The described inner channel arrangement enables that no hoses are needed between the hydraulically operated pivotal joint and another hydraulically operated pivotal joint. This feature is advantageous because this eliminates the need of hosing between two hydraulically operated pivotal joints. The pressure medium, such as hydraulic oil may be conducted between the braking arrangements of the two hydraulically operated pivotal joints inside the swing damping device. No hoses are needed between the two braking arrangements. This is important, for example, in harvester use because in the operating environment near the swing damping device there is a high possibility to get an impact from a tree branch or a log, and this may break the external hose in the swing damping device. The swing damping device is also easier to maintain and more reliable.

Another advantage is that the supply of the pressure medium for the swing damping device can be conducted from two alternative sources. The supply for the pressure medium can be arranged from a crane arm of a working machine, such as the harvester, or the pressure medium can be conducted from a working element, such as a rotator or a grapple. This makes the usability of the swing damping device better and gives more options for end-users.

As the braking of the braking arrangement is controlled by hydraulics, the braking force can be adjusted. Comparing to mechanically operated swing damping devices having a mechanically operated pivotal joint there is always a constant braking action in these devices and the braking must be in most cases manually adjusted. In the hydraulically operated pivotal joint the pressure and the braking force can be adjusted by an operator. Further, the braking can be switched off. This gives more functionality to the hydraulically operated pivotal joint, improves the efficiency of the hydraulically operated pivotally joint and reduces the risk of overheating and excessive wearing. Thus, the hydraulically operated pivotal joint has a longer service life.

The hydraulically operated pivotal is constructed so that the first brake arrangement is mounted on the top of the non-pivoting pin. This is advantageous because the first braking arrangement can be removed easily from the swing damping device, and in case of maintenance, it can be easily replaced by a new one.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figures 1a - 1c** are simplified example illustrations of a hydraulically operated pivotal joint;
**Figure 2** is a simplified example illustration of a hydraulically operated pivotal joint;
**Figure 3** is simplified example illustration of a hydraulically operated pivotal joint;
**Figures 4a - 4b** are simplified example illustrations of a swing dampening device;
**Figures 5a - 5b** are other simplified example illustrations of a swing dampening device;
**Figure 6** is an explosive view of an example of a swing damping device; and
**Figure 7a - 7b** are simplified hydraulic diagrams of two example types of swing dampening devices.

### DETAILED DESCRIPTION

Reference will now be made in detail to the embodiments of the present invention, examples of which are illustrated in the accompanying drawings.

It is common that in the operation of a working machine equipped with a swing damping device the braking is needed to be decreased, stopped or reduced to a minimal level. The brake action may need to be switched off by an operator. During normal operation it is not always necessary to apply breaking on the swing damping device. Sometimes the braking is even unwanted. In hydraulically operated pivotal joints, where a hydraulically operated pivotal joint is in constantly braked, it warms up the swing damping device and over the time the brake can overheat. The heating creates energy losses and the constant breaking action raises the risk of malfunction. When the brake is constantly braked the brake is subjected to unnecessary wearing. This unnecessary wearing can over the time lead to damaging of the brake. This leads to unwanted shutdown of the operating machine. The reducing or switching of the braking is may be done by using a hydraulically operated pivotal joint, which circuit is hydraulically piloted by a pressure medium, from the outside of the hydraulically operated pivotal joint. In this way dampening torque can be adjusted by adjusting the pressure of the pressure medium.

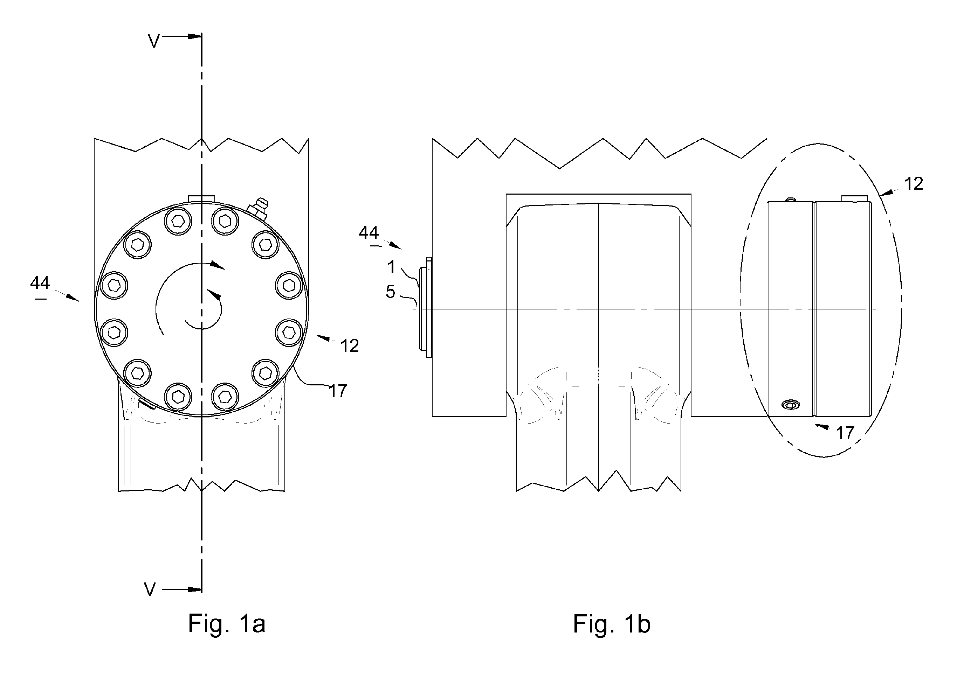

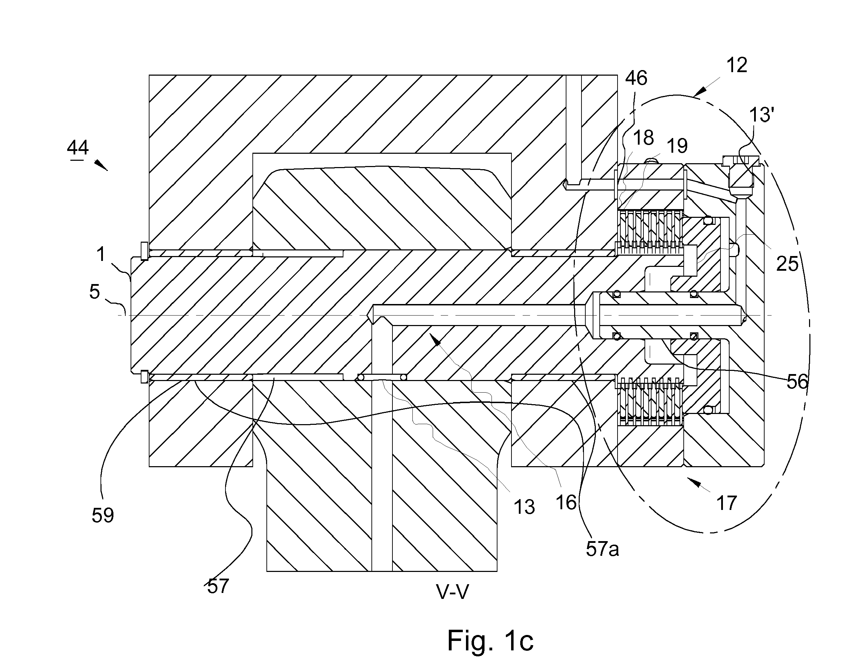

Figures 1a to 1c illustrate a hydraulically operated pivotal joint, where Figures 1a and 1b illustrate two projections of a hydraulically operated pivotal joint 44 and Figure 1c is a sectional illustration of the hydraulically operated pivotal joint 44. The hydraulically operated pivotal joint 44 for a swing damping device 43, wherein the hydraulically operated pivotal joint 44 is arranged to dampen a swing motion of the swing damping device 43, the hydraulically operated pivotal joint comprising 44 a non-pivoting pin 1, a first inner channel arrangement 16 comprising a first pressure inlet 13 for providing an inlet for a pressure medium, a first braking arrangement 12 arranged to create a braking force for dampening the swing motion, wherein the braking force is provided by the first braking arrangement 12 by means of pressure provided by the pressure medium conducted to the first braking arrangement 12 via the first inner channel arrangement 16. The first inner channel arrangement 16 further comprises a first pressure outlet 46, where to the pressure medium is conducted from the first pressure inlet 13 through the non-pivoting pin 1 and through the first braking arrangement 12 to enable conducting of the pressure medium for a second hydraulically operated moving apparatus of the swing damping device 43.

The non-pivoting pin 1 comprises a first pivoting axis 5, wherein the non-pivoting pin 1 is arranged to receive the swing motion around the first pivoting axis 5. This is indicated with arrows in Figure 1a. This may be done by a pair of bearing surfaces 57a on the non-pivoting pin 1. The non-pivoting pin 1 comprises a gearing 57, which enables that the non-pivoting pin 1 is non-pivoting. In Figures 1b and 1c the first braking arrangement 12 is indicated inside an ellipsis with dash-dot line. The first braking arrangement 12 comprises a housing 17, wherein the first inner channel arrangement 16 leads through the housing 17 to the non-pivoting pin 1, which are arranged to pivot in relation to each other.

Figure 1c illustrates how the first inner channel arrangement 16 is constructed inside the hydraulically operated pivotal joint 44. The first inner channel arrangement 16 is arranged from the first pressure inlet 13 through the non-pivoting pin 1 and further through the housing 17 of the first braking arrangement 12 and leads to the first pressure outlet 46. As the first pivoting axis 5 is pivotable the position of the first pressure outlet 46 may be so that the first pressure outlet 46 may be below the first pressure inlet 13 contrary to the example disclosed in Figure 1c.

The first braking arrangement 12 comprise at least a first friction element 18 and a second friction element 19 which are arranged to create the friction force, which dampens the swing motion. The braking force between the first friction element 18 and the second friction element 19 may be increased and decreased by adjusting the pressure of the pressure medium. The braking is created by the friction between the first friction element 18 and the second friction element. The first friction element 18 is non-rotatably connected to the housing 17 to pivot with the housing 17 and the second friction element 19 is non-rotatably connected to the non-pivoting pin 1. The housing 17 comprises a shaft 56 around which the housing 17 is pivotable.

The first braking arrangement 12 comprises a piston 25 arranged to reciprocate inside the first braking arrangement 12 by means of the pressure provided by the pressure medium, and arranged to push the first friction element 18 and the second friction element 19 towards each other to effect the braking force of the first braking arrangement 12.

A braking action takes place when the second friction element 19, which is non-pivoting, comes in contact with the first friction element 18, which is pivoting with the housing 17. There may be several friction plates in one braking arrangement 12. Thus there are enough friction surfaces to create the needed friction for the braking and to secure a reliable braking action.

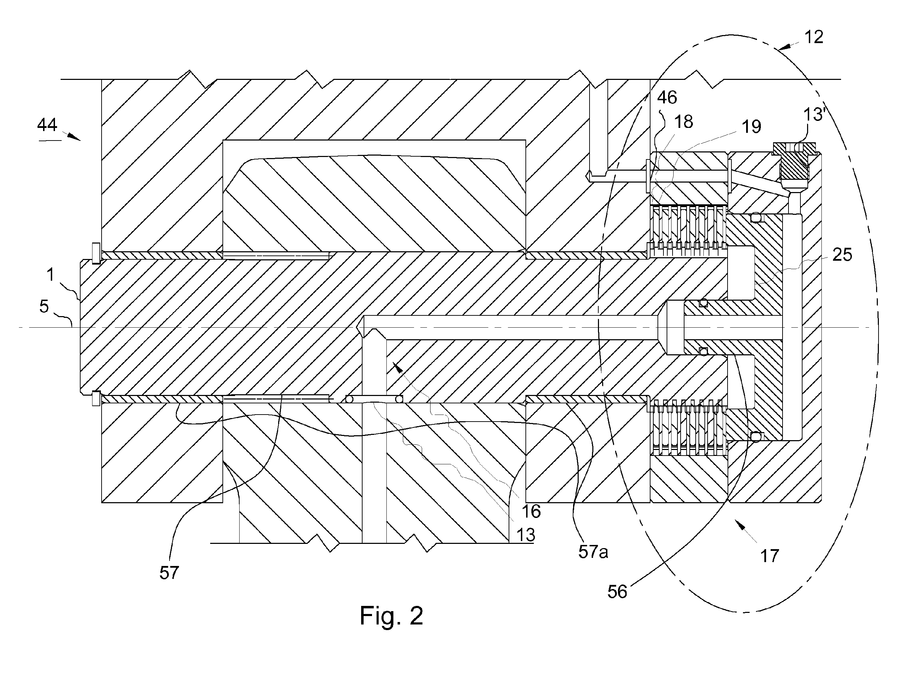

Figure 2 is a simplified example illustration of a hydraulically operated pivotal joint 44. Figure 2 illustrates a hydraulically operated pivotal joint 44, which is similar to the one disclosed in Figure 1c. The difference is that the first braking arrangement 12 is different. The first inner channel arrangement 16 leads through the housing 17 and the piston 25. The shaft 56 is directly integrated into the piston 25.

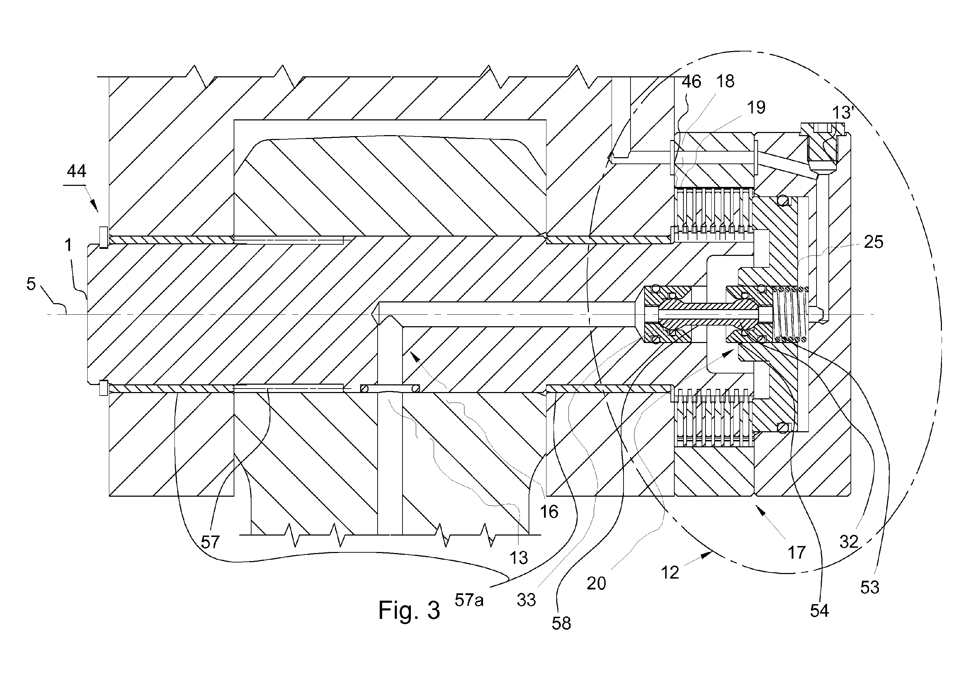

Figure 3 is simplified example illustration of a hydraulically operated pivotal joint 44. Figure 3 illustrates a hydraulically operated pivotal joint 44 equipped with a swivel joint 20. The first inner channel arrangement 16 comprises the swivel joint 20 comprising a first ball joint 32 and a second ball joint 33 connected to each other with a distance from one another, wherein the first ball joint 32 is located inside the first braking arrangement 12 and the second ball joint is located 33 inside the non-pivoting pin 1 to enable eccentricity between the first braking arrangement 12 and the non-pivoting pin 1 and to conduct the pressure medium between the first braking arrangement 12 and the non-pivoting pin 1. The first ball joint 32 is concentric with the second ball joint 33.

The first ball joint 32 and the second ball joint 33 form an inner part 58 of the swivel joint 20. The swivel joint 20 functions as a hydraulic bushing between the first braking arrangement 12 and the non-pivoting pin 1 to conduct pressure medium between the first braking arrangement 12 and the non-pivoting pin 1. The swivel joint 20 further comprises a pair of sockets 54, which function as a casing for the ball joints 32, 33. This function is advantageous because the swivel joint enables that the non-pivoting pin 1 may be adjusted or slightly moved when it is mounted into the swing damping device 43. The non-pivoting pin 1 may not mount directly to correct position in the swing damping device 43, because this depends on the finish of the gearing 57. The swivel joint 20 helps to remove this problem. The parts that the swivel joint 20 connects are in rotation in relation to each other. The swivel joint 20 functions as a hydraulic connection/bushing by squeezing the ball joints 32, 33 towards the pair of sockets 54 by the spring force of a spring 53 of the swivel joint 20 and seals the inner part 58 towards the pair of sockets 54. After mounting the non-pivoting pin 1 into the swing damping device 43 the non-pivoting pin 1 can be fixed in place with a key piece or similar type of equipment.

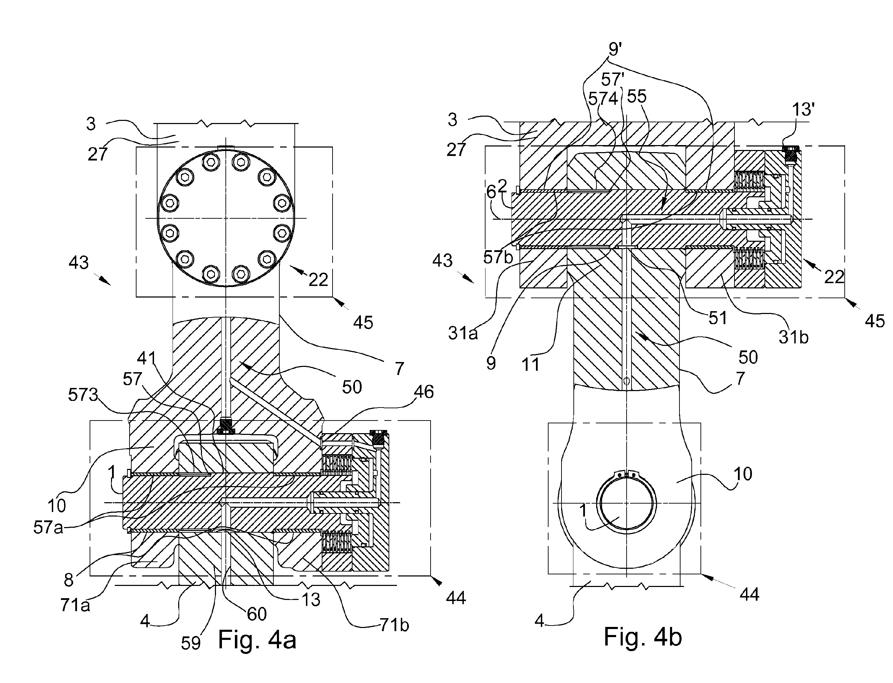

Figures 4a and 4b are simplified example illustrations of a swing dampening device illustrated with two projections. For clarity some reference numbers in the hydraulically operated pivotal joint 44 have been left out as they are already described in Figures 1a to 1c. In this example, the swing damping device 43 further comprises a second hydraulically operated pivotal joint 45 and a suspension link 7 arranged between the hydraulically operated pivotal joint 44 and the second hydraulically operated pivotal joint 45, the suspension link 7 comprising a second inner channel arrangement 50. The suspension link 7 is arranged to conduct the pressure medium from the first pressure outlet 46 to a second pressure inlet 51 of the second hydraulically operated pivotal joint 45 through the second inner channel arrangement 50. In the example disclosed in Figures 4a and 4b the second hydraulically operated pivotal joint 45 acts as a second hydraulically operated moving apparatus of the swing damping device 43.

The second hydraulically operated pivotal joint 45 comprises a second non-pivoting pin 2 comprising a second pivoting axis 6, wherein the second non-pivoting pin 2 is arranged to receive swing motion around the second pivoting axis 6. The second hydraulically operated pivotal joint 45 further comprises a second braking arrangement 22 arranged to create a braking force for dampening the swing motion, wherein braking force is provided by the second braking arrangement 22 by means of pressure provided by the pressure medium conducted to the second braking arrangement 22 from the second pressure inlet 51 of the second hydraulically operated pivotal joint 45. The second braking arrangement 22 may be identical to the first braking arrangement 12 disclosed in Figures 4a and 4b. The second hydraulically operated pivotal joint 44 may further comprise a fourth pressure inlet 13', which may be plugged if not used. The plug and the fourth pressure inlet 13' are also illustrated in Figures 1c, 2 and 3.

The swing damping device 43 may be arranged to be rotatably connected to a crane arm 3 of a working machine 27. The swing damping device 43 may be arranged to be rotatably connected to a working element 4 of a working machine 27. For simplicity, the working machine 27 is only partially illustrated in the Figures 4a and 4b.

The suspension link 7 comprises a first portion 10 and a second portion 11 at a distance from each other, a first through-hole 8 in the first portion 10. The first through-hole 8 is adapted for receiving the non-pivoting pin 1 so that the non-pivoting pin 1 extends through the first through-hole 8 and is non-pivotally connected in relation to the suspension link 7. The suspension link 7 further comprises a second through-hole 9 in the second portion 11. The second through-hole 9 is adapted for receiving the second non-pivoting pin 2 so that the second non-pivoting pin 2 extends through the second through-hole 9 and is non-pivotally connected in relation to the suspension link 7. The second hydraulically operated pivotal joint 45 is arranged to be perpendicular in relation to the hydraulically operated pivotal joint 44 by means of the suspension link 7 and vice versa. This means that the structure of the suspension link 7 is arranged so that the hydraulically operated pivotal joint 44 is perpendicular in relation to the second hydraulically operated pivotal join 45. This is enabled by the difference in the first portion 10 and the second portion 11.

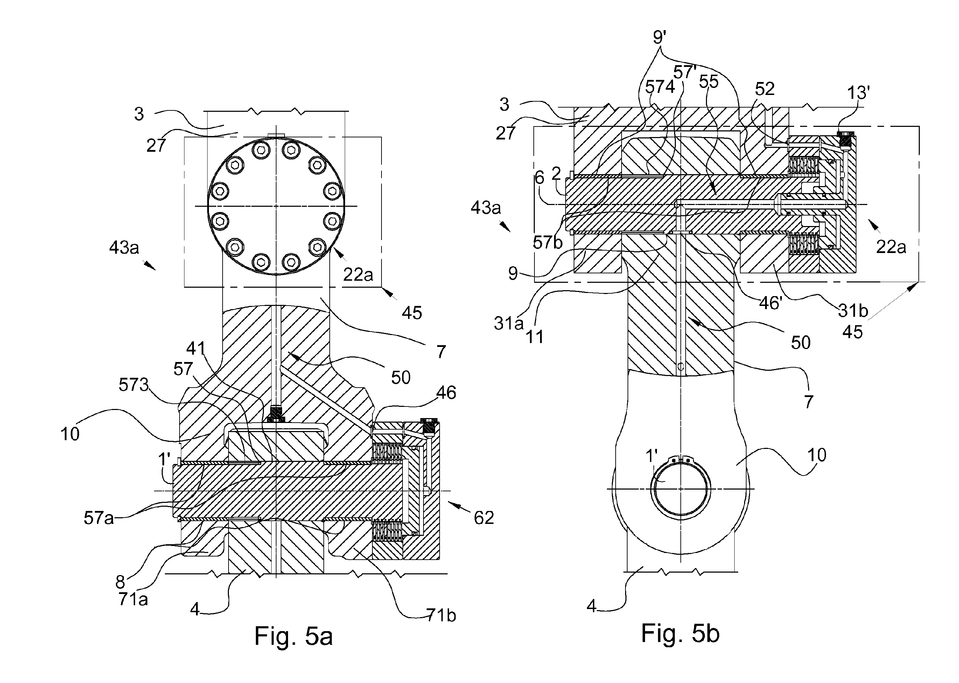

The crane arm 3 may comprise a first bracket portion 31a and a second bracket portion 31b and may comprise a third through-hole 9' in each bracket portion 31a, 31b. Correspondingly, the first portion 10 of the suspension link 7 may comprise a third bracket portion 71a and a fourth bracket portion 71b and may comprise the first through-hole 8 in each bracket portion 71a, 71b. For example, in the embodiment of the swing damping device 43 in Figure 4a and 4b, the working element 4 may be non-rotatably connected to the non-pivoting pin 1 of the hydraulically operated pivotal joint 44. For example, the working element 4 may have a third gearing 573 in a fourth through-hole 41 of the working element 4, and the third gearing 573 fits into the gearing 57 of the non-pivoting pin 1 of the hydraulically operated pivotal joint 44. Thereby, the working element 4 may be detachably attached to the non-pivoting pin 1 from the third gearing 573. Correspondingly, in the second through hole 9 of the second portion 11 of the suspension link 7 may have a fourth gearing 574 that fits into a second gearing 57' of the second non-pivoting pin 2 of the second hydraulically operated pivotal joint 45. Thereby, the suspension link 7 may be detachably attached to the second non-pivoting pin 2 from the fourth gearing 574. The rotation of the suspension link 7 in relation to the working element 4 may be done by the pair of bearing surfaces 57a of the hydraulically operated pivotal joint 44, and the pair of bearing surfaces 57a may be placed on the non-pivoting pin 1 and may be adapted to the first trough-hole 8 of the suspension link 7. The rotation of the crane arm 3 of the working machine 27 in relation to the suspension link 7 may be done by a second pair of bearing surfaces 57b of the second hydraulically operated pivotal joint 45, and the pair of second bearing surfaces 57b may be adapted to the third trough hole 9' of the crane arm 3. A similar pair of bearing surfaces 57a, 57b that is illustrated in Figure 4a and 4b may be used for the embodiment of the swing damping device 43a illustrated in Figures 5a and 5b for enabling the rotation of the crane arm 3 of the working machine 27 in relation to the suspension link 7 and for enabling the rotation of the suspension link 7 in relation to the working element 4. A similar connection that has been disclosed in the embodiment of the swing damping device 43 in Figure 4a and 4b between the non-pivoting pin 1 and the working element 4 may be arranged between the working element 4 and a lower non-pivoting pin 1' of the embodiment of the swing damping device 43a illustrated in Figure 5a and 5b. Correspondingly, a similar connection that have been disclosed in the embodiment of the swing damping device 43 in Figure 4a and 4b may be arranged between the link 7 and the second non-pivoting pin 2 of the embodiment of the swing damping device 43a illustrated in Figure 5a and 5b.

The first portion may be a fork-like structure as described in Figures 1a to 7 but also other arrangements are possible. This structure makes the first pivoting axis 5 to be in a 90-degree angle compared to the second pivoting axis 6. In other words, the first pivoting axis 5 and the non-pivoting pin 1 point in a different direction than the second pivoting axis 6 and the second non-pivoting pin 2. This enables the use of the swing dampening device 43 in various different positions. This also enables the use of the swing dampening device 43 like "an arm", which may be manipulated into various positions in order to work and function precisely and, for example, grab to targets that are in various positions. In Figures 1a to 7 the crane arm 3 or a work tool may be the fork-like structure. However, but the present invention is not limited to this kind of structure and other arrangements are also possible depending on the working machine 27 and the working element 4 to which the swing damping device 43 is attached to. For example, the crane arm 3 may be attached in a similar way as the working element 4 in Figures 1a to 7. The crane arm 3 may have a single mounting bracket 59 as described in Figures 1a to 7 instead of the fork-like structure to which the working element is attached to. The structure of the crane arm 3 and the working element 4 depends on what kind of working machine the swing damping device is to be attached to and what kind of working element 4 the working machine 27 carries via the swing damping device 43. For example a harvester equipped with a harvester head may have a different type of attachments for attaching the swing damping device 43 than a wood-handling machine equipped with a grapple.

Figures 4a and 4b illustrate also how the second inner channel arrangement 50 is constructed inside the suspension link 7 and how it is connected to the first inner channel arrangement 16 and to the second pressure inlet 51 of the second hydraulically operated pivotal joint 45. The first pressure inlet 13 of the hydraulically operated pivotal joint 44 is adapted to receive the pressure medium from the working element 4. The working element 4 may refer to various types of devices, for example, to a rotator, a grapple or a harvester head. It may be any type of a work tool or a like, which needs the hydraulically operated pivotal joint 44 to operate. The pressure medium is conducted from the working element 4 via an internal channel 60 in the working element 4.

Figures 5a and 5b are other simplified example illustrations of a swing dampening device 43a similar to the one in Figures 4a to 4b. The difference is that the pressure medium is conducted to the swing damping device 43a from the crane arm 3. Another difference is that the pressure medium does not continue any further from a first lower braking arrangement 62 illustrated below a second braking arrangement 22a. Therefore, the lower non-pivoting pin 1' and a lower piston inside the first lower braking arrangement 62 do not comprise an internal channel for supplying the pressure medium any further because this is not needed. When comparing the second hydraulically operated pivotal joint 45 in Figures 5a and 5b to the one disclosed in Figures 4a and 4b, one difference is that the inlets and outlets of the second hydraulically operated pivotal joint 45 have exchanged places. Otherwise the structure of the swing damping device 43a in Figures 5a and 5b is similar to the structure disclosed on Figures 4a and 4b. For simplicity the working machine 27 is only partially illustrated in Figures 5a and 5b.

The second braking arrangement 22a comprises a third pressure inlet 52 for the pressure medium and a second pressure outlet 46' for conducting the pressure medium from the crane arm 3 to the suspension link 7. The third pressure inlet 52 of the second hydraulically operated pivotal joint 45 is adapted to receive the pressure medium from the crane arm 3. The second hydraulically operated pivotal joint 45 further comprises the second braking arrangement 22a arranged to create a braking force for dampening the swing motion, wherein the braking force is provided by the second braking arrangement 22a by means of pressure provided by the pressure medium conducted to the second braking arrangement 22a from the crane arm 3. Alternately the pressure medium may be conducted to the swing damping device 43a from the fourth pressure inlet 13', in which case a plug is removed from the fourth pressure inlet 13'.

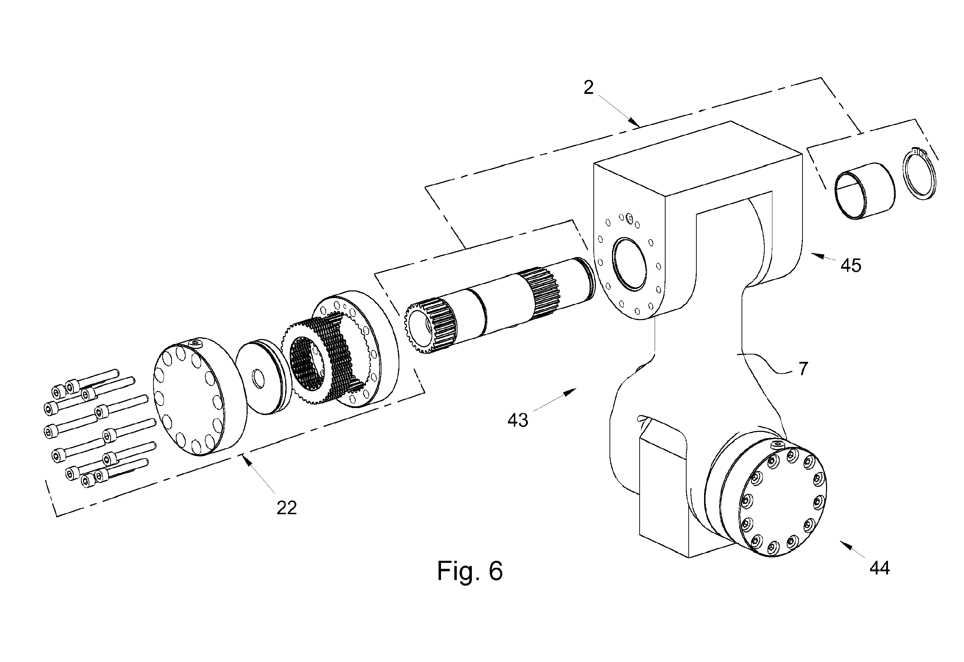

Figure 6 is an explosive view of a swing damping device 43. The swing damping device 43 disclosed in Figure 6 is similar to the one in disclosed Figures 4a and 4b and Figures 5a and 5b. For simplicity, some reference numbers are left out from Figure 6 because they are already described in Figures 4a, 4b, 5a and 5b. The explosion view shows how parts are mounted into the swing damping device 43. Figure 6 illustrates clearly the parts that belong to a braking arrangement in this case the second braking arrangement 22. Figure 6 also illustrates clearly the parts that belong to a non-pivoting pin in this case the second non-pivoting pin 2. The hydraulically operated pivotal joint 44 can be similarly illustrated as an exploded view, and therefore, it is not illustrated here again for the sake of clarity.

The hydraulically operated pivotal 44 joint may be assembled by a method for manufacturing a hydraulically operated pivotal joint 44 for a swing damping device 43, wherein the hydraulically operated pivotal joint 44 is arranged to dampen a swing motion, the hydraulically operated pivotal joint comprising 44 a non-pivoting pin 1, a braking arrangement 12, which is arranged to create a braking force for dampening the swing motion. The hydraulically operated pivotal joint 44 is manufactured by assembling the braking arrangement 12 at one end of the non-pivoting pin 1 and at least partially around the non-pivoting pin 1 after the non-pivoting pin 1 is mounted into the hydraulically operated pivotal joint 44. This way the first braking arrangement 12 may be disassembled easily from the swing damping device 43 for example for maintenance reasons. Naturally the same method is also suitable for the second hydraulically operated pivotal joint 45 as illustrated in the Figure 6. As disclosed in Figure 4a and 4b the non-pivoting partially protrudes out from the crane arm 3 or the suspension link 7. The second braking arrangement 22 may be arranged around this protruding portion of the second non-pivoting pin 2.

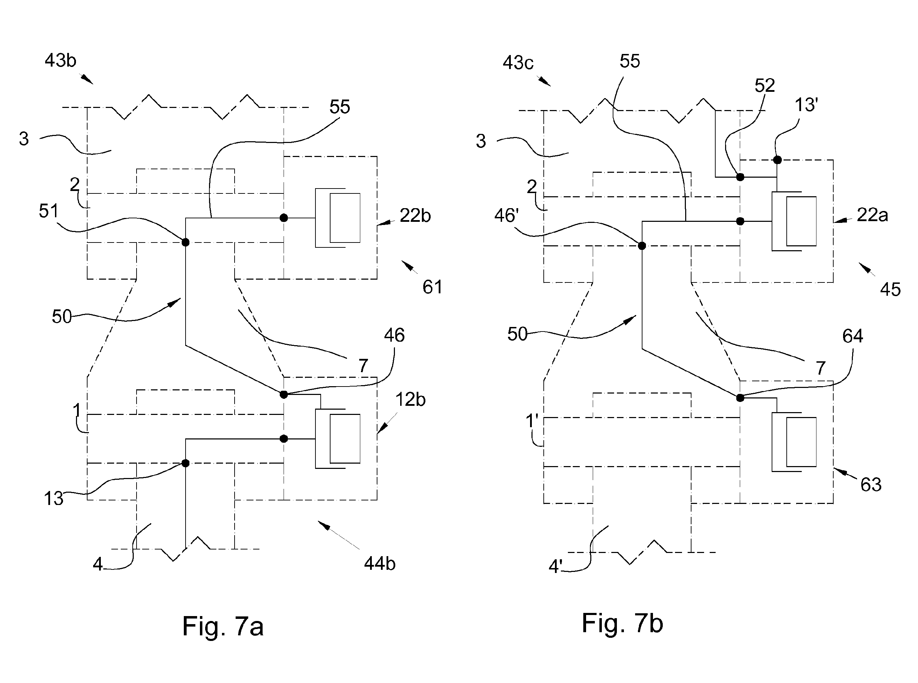

Figure 7a is a simplified schematical illustration of the swing damping device 43b. Figure 7a illustrates one example of a swing damping device 43b comprising a hydraulically operated pivotal joint 44b. The swing damping device 43b comprises a second hydraulically operated pivotal joint 61 comprising a second non-pivoting pin 2, a third inner channel arrangement 55, a second braking arrangement 22b arranged to create a braking force for dampening swing motion. The braking force is provided by the second braking arrangement 22b by means of pressure provided by the pressure medium conducted to the second braking arrangement 22b via the third inner channel arrangement 55. The swing damping device 43b also comprises a suspension link 7 arranged between the hydraulically operated pivotal joint 44b and the second hydraulically operated pivotal joint 61. The suspension link 7 comprises a second inner channel arrangement 50, and the suspension link 7 is arranged to conduct the pressure medium from the first pressure outlet 46 to a second pressure inlet 51 of the second hydraulically operated pivotal joint 61 through the second inner channel arrangement 50. Here the second hydraulically operated pivotal joint 61 does not have an external pressure inlet because it is not needed as the pressure medium is conducted to the swing damping device 43b from the working element 4 direction. Otherwise the structure in the schematical illustration is similar to the structure of the swing damping device 43 illustrated in Figure 4a and 4b.

Figure 7b is a simplified schematical illustration of another type of a swing damping device 43c. The schematical illustration refers to the swing damping device 43a illustrated in Figures 5a and 5b. In Figure 7b the pressure medium is not conducted any further from the second lower braking arrangement 63 that is located below the second hydraulically operated pivotal joint 45. The lower non-pivoting pin 1' of the second lower braking arrangement 63 in the Figure 7b is therefore not equipped with internal channels. Also the working element is different in Figure 7b compared to the one disclosed in Figure 7a and therefore it is referenced with indication 4'.

In this example the second braking arrangement 22a comprises a third pressure inlet 52 for the pressure medium and a second pressure outlet 46' for conducting pressure medium from the crane arm 3 via the third inner channel arrangement 55 to the suspension link 7. From the suspension link 7 the pressure medium leads to a fifth pressure inlet 64 to be used in the second lower braking arrangement 63 in the Figure 7b.

A swing damping device may be designed to lift and hold, for example, a rotator, a grapple or a harvester head. The rotator is designed to be used in material and wood handling to lift, hold and rotate the grapple or the harvester head. In one embodiment of the swing damping device the rotator can carry loads that are below 20 tons. In one embodiment of the swing damping device the operating pressures vary in the braking, but the pressure can be in one embodiment of the swing damping device from a low pressure level, such as around 30 bars up to around 200 bars.

Generally the invention is particularly useful, when the swing damping device 43, 43a, 43b, 43c is mounted in a harvester. When the harvester is working in the forest the position of the swing damping device may be manipulated into various positions by the hydraulically operated pivotal joint 44 and/or with the second hydraulically operated pivotal joint 45, 61. The working element 4 may be a rotator or a work tool such as a harvester head or combination of a rotator and a work tool. The swing damping device may be mounted in a harvester, wherein a rotator is suspended via the swing damping device. The present invention is not limited merely to harvester application, because the hydraulically operated pivotal joint may be used in other forestry machines, construction and mining equipment, special duty machines or similar applications that require a hydraulically operated pivotal joint to operate.

It is obvious to a person skilled in the art that with the advancement of technology, the basic idea of the invention may be implemented in various ways. The invention and its embodiments are thus not limited to the examples described above, instead they may vary within the scope of the claims.

The embodiments of the invention described herein may be used in any combination with each other. Several or at least two of the embodiments may be combined together to form a further embodiment of the invention. A method or a device to which the invention is related may comprise at least one of the embodiments of the invention described hereinbefore.

It is to be understood that any of the above embodiments or modifications can be applied singly or in combination to the respective aspects to which they refer, unless they are explicitly stated as excluding alternatives.

## Claims

1. A hydraulically operated pivotal joint (44) for a swing damping device (43), wherein the hydraulically operated pivotal joint (44) is arranged to dampen a swing motion, the hydraulically operated pivotal joint comprising (44)
- a non-pivoting pin (1),
- a first inner channel arrangement (16) comprising a first pressure inlet (13) for providing an inlet for a pressure medium,
- a first braking arrangement (12) arranged to create a braking force for dampening the swing motion, wherein the braking force is provided by the first braking arrangement (12) by means of pressure provided by the pressure medium conducted to the first braking arrangement (12) via the first inner channel arrangement (16),
wherein the first inner channel arrangement (16) further comprises
- a first pressure outlet (46), where to the pressure medium is conducted from the first pressure inlet (13) through the non-pivoting pin (1) and through the first braking arrangement (12)) to enable conducting of the pressure medium for a second hydraulically operated moving apparatus of the swing damping device (43).

2. The hydraulically operated pivotal joint (44) according to claim 1, wherein the first braking arrangement (12) comprises
- a housing (17), wherein the first inner channel arrangement (16) leads through the housing (17) to the non-pivoting pin (1), which are arranged to pivot in relation to each other.

3. The hydraulically operated pivotal joint (44) according to the claim 1 or 2, wherein the first braking arrangement (12) comprises
- at least a first friction element (18) and a second friction element (19), which are arranged to create the friction force dampening the swing motion.

4. The hydraulically operated pivotal joint (44) according to the claim 3, wherein the first friction element (18) is non-rotatably connected with the housing (17) to pivot with the housing (17) and the second friction element (19) is non-rotatably connected with the non-pivoting pin (1).

5. The hydraulically operated pivotal joint (44) according to claim 3 or 4, wherein the first braking arrangement (12) comprises
- a piston (25) arranged to reciprocate inside the first braking arrangement (12) by means of pressure provided by the pressure medium, and arranged to push the first friction element (18) and the second friction element (19) towards each other to effect the braking force of the first braking arrangement (12).

6. The hydraulically operated pivotal joint (44) according to any of the preceding claims 1 to 5, wherein the first inner channel arrangement (16) comprises
- a swivel joint (20) comprising a first ball joint (32) and a second ball joint (33) connected to each other with a distance from one another, wherein the first ball joint (32) is located inside the first braking arrangement (12) and the second ball joint is located (33) inside the non-pivoting pin (1) to enable eccentricity between the first braking arrangement (12) and the non-pivoting pin (1) and to conduct the pressure medium between the first braking arrangement (12) and the non-pivoting pin (1).

7. A swing damping device (43) comprising the hydraulically operated pivotal joint (44) according to any of the preceding claims 1 to 6, wherein the swing damping device (43) further comprises:
- a second hydraulically operated pivotal joint (45) according to any of the preceding claims 1 to 6; and
- a suspension link (7) arranged between the hydraulically operated pivotal joint (44) and the second hydraulically operated pivotal joint (45), the suspension link (7) comprising a second inner channel arrangement (50), wherein the suspension link (7) is arranged to conduct the pressure medium from the first pressure outlet (46) of the hydraulically operated pivotal joint (44) to a second pressure inlet (51) of the second hydraulically operated pivotal joint (45) through the second inner channel arrangement (50).

8. A swing damping device (43) comprising the hydraulically operated pivotal joint (44) according to any of the preceding claims 1 to 6, wherein the swing damping device (43) further comprises:
- a second hydraulically operated pivotal joint (61) comprising a second non-pivoting pin (2) a third inner channel arrangement (55), a second braking arrangement (22) arranged to create a braking force for dampening the swing motion, wherein the braking force is provided by the second braking arrangement (22) by means of pressure provided by the pressure medium conducted to the second braking arrangement (22) via the third inner channel arrangement (55); and
- a suspension link (7) arranged between the hydraulically operated pivotal joint (44) and the second hydraulically operated pivotal joint (61), the suspension link (7) comprising a second inner channel arrangement (50), wherein the suspension link (7) is arranged to conduct the pressure medium from the first pressure outlet (46) of the hydraulically operated pivotal joint (44) to a second pressure inlet (51) of the second hydraulically operated pivotal joint (61) through the second inner channel arrangement (50).

9. The swing damping device (43) according to claim 7 or 8, wherein the swing damping device (43) is arranged to be rotatably connected to a crane arm (3) of a working machine (27).

10. The swing damping device (43) according to any of the claims 7 to 9, wherein the swing damping device (43) is arranged to be rotatably connected to a working element (4) of a working machine (27).

11. The swing damping device (43) according to claim 10, wherein the first pressure inlet (13) of the hydraulically operated pivotal joint (44) is adapted to receive the pressure medium from the working element (4).

12. The swing damping device (43) according to claim 9, wherein the first pressure inlet (13) of the hydraulically operated pivotal joint (44) is adapted to receive the pressure medium via the crane arm (3).

13. The swing damping device (43) according to any of the preceding claims 9 to 12, wherein the working machine (27) is a harvester.

14. The swing damping device (43) according to any of the preceding claims 10 or 11, wherein the working element (4) is a rotator or a work tool or combination of a rotator and a work tool.
